# EUROPÄISCHE PATENTSCHRIFT

(11) **EP 0 617 244 B1**
(45) Veröffentlichungstag und Bekanntmachung des Hinweises auf die Patenterteilung: **17.04.1996**
(21) Anmeldenummer: 94104771.4
(22) Anmeldetag: 25.03.1994
(51) Int. Cl.: F24H 9/02, F24H 3/06

(54) **Luftheizgerät**
Air heater
Réchauffeur d'air

(30) Priorität: 26.03.1993 DE 4309940
(43) Veröffentlichungstag der Anmeldung: 28.09.1994
(73) Patentinhaber: WEBASTO THERMOSYSTEME GmbH, D-82131 Stockdorf (DE)
(72) Erfinder: Habijanec, Stephan, D-82152 Krailling (DE); Sallinger, Christine, D-85716 Unterschleissheim (DE)
(74) Vertreter: Wiese, Gerhard

(56) Entgegenhaltungen:
- DE-U- 7 702 288
- US-A- 4 391 459

## Beschreibung

Die Erfindung betrifft ein Luftherzgerät mit einem Gehäuse, das in Längsrichtung in eine obere und eine untere Schale unterteilt ist gemäß dem Oberbegriff des Patentanspruchs 1.

Ein gattungsgemäßes Luftheizgerät ist aus dem Gebrauchsmuster DE-U-77 02 288 bekannt. Bei diesem übergreift eine untere Gehäuseschale die obere Gehäuseschale im Bereich der Seitenwände und beide Schalen sind an einem im Inneren des Heizgerätes angeordneten, den Brenner und die Luftförderungselemente umgebenden Gehäuseteil angeschraubt. Abgesehen davon, daß an diesem inneren Gehäuseteil relativ dickwandige Teile zur Aufnahme der Schraublöcher vorgesehen sind, ist auch die Montage und eine spätere Wartung dieses Heizgerätes mit einem aufwendigen Lösen bzw. Befestigen von Schrauben verbunden.

Der Erfindung liegt die Aufgabe zugrunde, ein Luftheizgerät zu schaffen, dessen Gehäuse leicht und ohne Zuhilfenahme von Werkzeugen montierbar und demontierbar ist.

Diese Aufgabe wird gemäß der Erfindung durch die kennzeichnenden Merkmale des Patentanspruchs 1 gelöst. Dadurch, daß die Schalen in vertikaler Richtung über vorspringende Teile an der einen und entsprechend geformte Vertiefungen an der anderen Schale in horizontaler Richtung unverschiebbar zueinander gelagert und durch in horizontaler Richtung quer zur Trennfuge federnd bewegbare Rastelemente in vertikaler Richtung verklammert werden, ergibt sich eine einfache federnd rastende Verbindung beider Schalen, die leicht herstellbar und leicht lösbar ist.

Die Rastelemente können zumindestens teilweise von mit den Schalen verbundenen Teilen gebildet werden, sie können jedoch alternativ auch durch separate, beide Schalen verklammernde Teile, gebildet werden. Es ist auch eine Kombination aus diesen beiden Verbindungsarten realisierbar.

Als an den Schalen angeordnete Rastelemente kommen beispielsweise vorteilhaft direkt an der einen Schale aus demselben Material angeformte Rastvorsprünge und an der anderen Schale angeordnete, entsprechend ausgebildete Rastvertiefungen infrage. Hierfür sind insbesondere kugelkappenförmige Knöpfe als Rastvorsprünge und komplementär dazu geformte Mulden als Rastvertiefungen geeignet.

Besonders vorteilhaft ist eine Ausführungsform, bei der ein Teil der Rastelemente von separate Teile darstellenden Lufteintritts- und/oder Luftaustrittsgittern gebildet wird, die stirnseitig an den Schalen vorgesehene Vorsprünge umgreifen.

In einer besonders vorteilhaften Ausgestaltung ist am Außenumfang des Gehäuses ein wenigstens eine der Schalen umgreifender, eine Öffnung in derselben abdeckender Deckel, vorgesehen, der mit der betreffenden Schale im Bereich der Seitenwände mittels federnd bewegbarer Rastelemente verklammert ist. Ein derartiger Deckel kann in seiner Erstreckung entweder auf eine Schale begrenzt und durch die Verklammerung mittels federnder Rastelemente leicht an dieser anzubringen und von dieser zu entfernen sein, er kann jedoch in einer weiteren Ausgestaltung auch verlängert sein, sodaß er eine Schale vollkommen umgreift und seine Rastelemente mit denen der anderen Schale zur vertikalen Verklammerung beider Schalen in Eingriff stehen. Somit kann ein Deckel, wie er ohnehin mit anderer Ausgestaltung und Befestigung für Wartungszwecke an einem Luftheizgerät üblich ist, zusätzlich zu den vorstehend beschriebenen Lufteintritts- und Luftaustrittsgittern, die ebenfalls - von ihrer speziellen Gestaltung abgesehen - für Luftheizgeräte übliche Bauteile darstellen, als zusätzliches, beide Schalen verklammerndes Teil, fungieren.

Unabhängig davon, ob sich ein solcher Deckel nur über eine oder beide Schalen des Gehäuses erstreckt, ist eine Ausgestaltung besonders vorteilhaft, bei der angrenzend an die Öffnung in einer der Schalen eine halbkreisförmige Ausnehmung vorgesehen ist, die mit einer einen entgegengesetzt geöffneten Halbkreis bildenden Ausnehmung am Deckel einen insgesamt kreisförmigen Durchbruch für eine Kabeldurchführung bildet. Durch diese Ausgestaltung wird eine einfache, teils vom Gehäuse, und teils vom Deckel gebildete Aufnahme für eine Kabeldurchführungstülle gebildet, für die bei herkömmlichen Luftheizgeräten wieder zusätzliche Teile erforderlich wären.

Ein Vorsehen von zwei höhengleichen Ausnehmungen in jeder der Seitenwände der die Öffnung aufweisenden Schale ermöglicht bei um 180° versetztem Aufsetzen des Deckels eine vorteilhafte Festlegung der Position der Kabeldurchführung bei der Montage.

Unterhalb des Deckels sind vorteilhaft durch die Öffnung zugängliche Elemente zur Einstellung, Überwachung, Diagnose und/oder Wartung des Heizgerätes angeordnet. Da der Deckel sich auf Grund seiner Rastverbindung leicht lösen läßt, sind diese Teile somit ebenfalls leicht zugänglich.

Ausführungsbeispiele der Erfindung sind nachfolgend anhand der Zeichnung beschrieben. Es zeigt:
- Fig. 1: Einen Längsschnitt durch ein Heizgerät,
- Fig. 2: einen Schnitt in Höhe der Schnittlinie II-II in Fig. 1,
- Fig. 3: einen Längsschnitt durch eine obere Schale des Gehäuses,
- Fig. 4: eine vergrößerte Darstellung eines Teilschnittes längs der Linie IV-IV in Fig. 3,
- Fig. 5: eine Draufsicht auf das Heizgerät nach Entfernen der oberen Schale (Schnitt V-V in Fig. 1),
- Fig. 6: eine perspektivische Außenansicht des Gehäuses mit einem Deckel,
- Fign.7 und 8: zwei Ansichten einer Kabeldurchführung,
- Fig. 9: eine vergrößerte Darstellung eines Einströmgitters,
- Fig. 10: einen Querschnitt durch das Einströmgitter längs der Linie X-X in Fig. 9,
- Fig. 11: eine Variante einer Verrastung von oberer und unterer Schale.

Ein insgesamt mit 1 bezeichnetes Luftheizgerät weist ein Gehäuse 2 auf, durch das über eine Stirnseite 3 mittels eines Heizluftgebläses 4 Luft angesaugt und über einen Wärmetauscher 5 zur gegenüberliegenden Stirnseite 6 zur Beheizung eines nicht dargestellten Fahrzeuginnenraumes hindurchgefördert wird. Das Heizluftgebläse 4 wird mittels eines Elektromotors 7 angetrieben, der zugleich ein Brennluftgebläse 8 treibt, das einem mit 9 bezeichneten Brenner Brennluft zuführt, die mit über eine Brennstoffleitung 10 zugeführtem Brennstoff ein brennbares Gemisch bildet, das in einer Brennkammer 11 verbrennt. Die dabei entstehenden heißen Abgase werden an der Stirnseite des Wärmetauschers 5 von der Brennkammer 11 kommend um 180° umgelenkt und erhitzen die Wände des Wärmetauschers 5, sodaß dieser Wärme an die vorbeistreichende Heizluft abgibt. Die Abgase verlassen dann über einen Abgasstutzen 12 das Luftheizgerät 1.

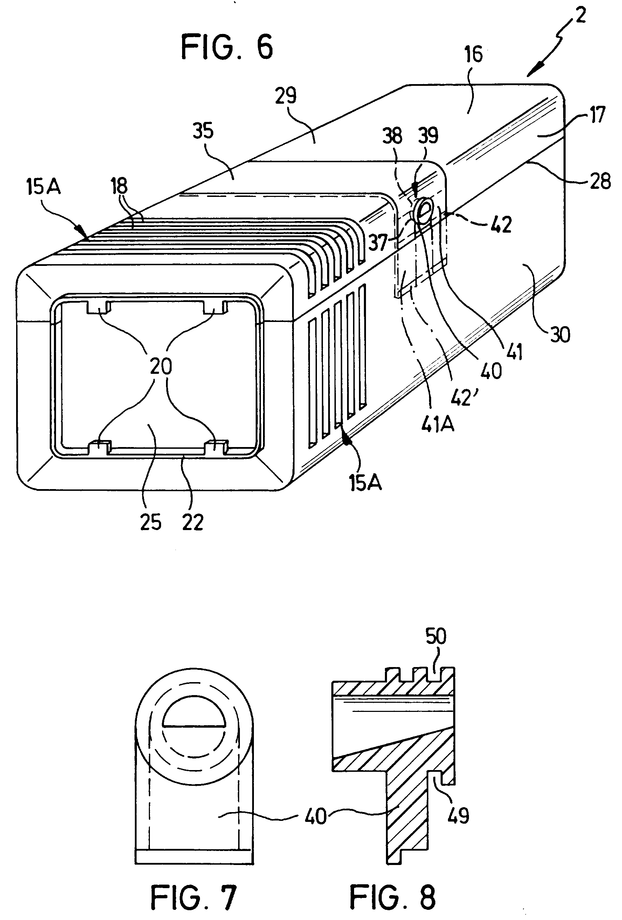

Auf der Eintrittsseite ist im Inneren des Gehäuses an der Einmündung zum Heizluftgebläse 4 eine ringförmige Blende 13 angeordnet, die in nicht näher bezeichneten Vorsprüngen an den Innenwänden des Gehäuses gehalten wird und auf der Lufteintrittsseite eine Lufteintrittskammer 14 begrenzt. In diese Lufteintrittskammer 14 tritt die Heizluft über mehrere Einströmgitter 15, 15 A ein. Die Einströmgitter 15, 15 A sind sowohl an der Stirnseite 3 des Gehäuses 2 als auch an der Oberseite und an den Seitenwänden vorgesehen (Fig. 6).

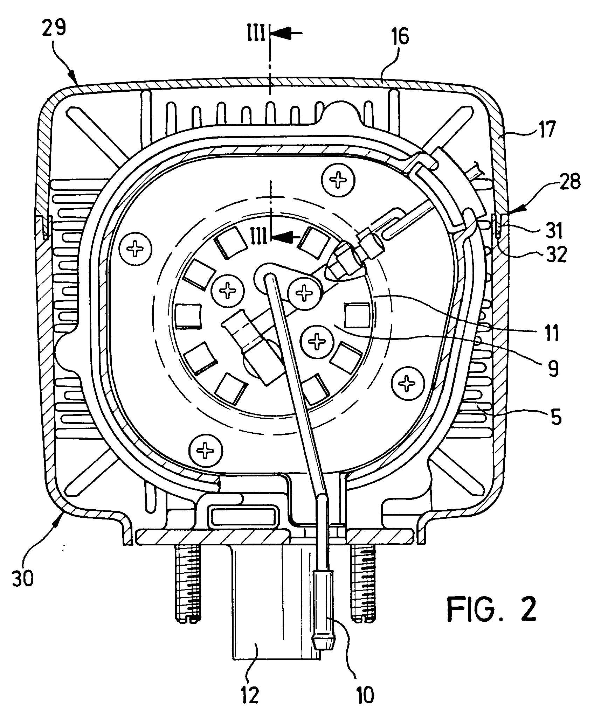

Das Gehäuse 2 ist in eine obere Schale 29 und eine untere Schale 30 geteilt, die im Bereich einer Trennfüge 28 zusammengefügt sind. Hierzu sind an der oberen Schale 29 in vertikaler Richtung nach unten vorspringende Teile 31 und an der unteren Schale 30 entsprechende Vertiefungen 32 zur Aufnahme der vorspringenden Teile 31 vorgesehen. Durch das Eingreifen der vorspringenden Teile 31 in die Vertiefungen 32 (Fig. 2) werden die obere Schale 29 und die untere Schale 30 in horizontaler Richtung unverschiebbar gegeneinander gelagert.

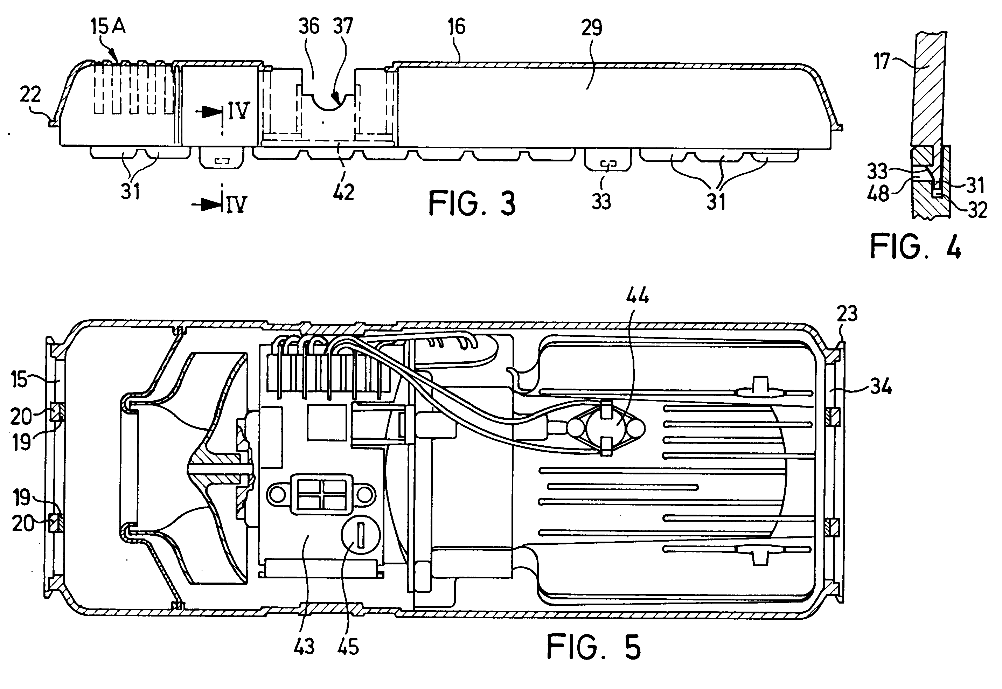

Zur vertikalen Verklammerung der oberen Schale 29 und der unteren Schale 30 sind Rastvorsprünge 33 (Fig. 4) an einem Teil der vorspringenden Teile 31 vorgesehen, die in Rastvertiefungen 48 an der Seitenwand der unteren Schale 30 in Eingriff geraten. Durch eine schräge Rampe an den Rastvorsprüngen 33 wird das Zusammenfügen der betreffenden vorspringenden Teile 31 mit den Vertiefungen 32 erleichtert. Eine Demontage der oberen Schale 29 und der unteren Schale 30 ist durch Eindrücken der Rastvorsprünge 33 nach innen mit gleichzeitigem Anheben der oberen Schale 29 möglich.

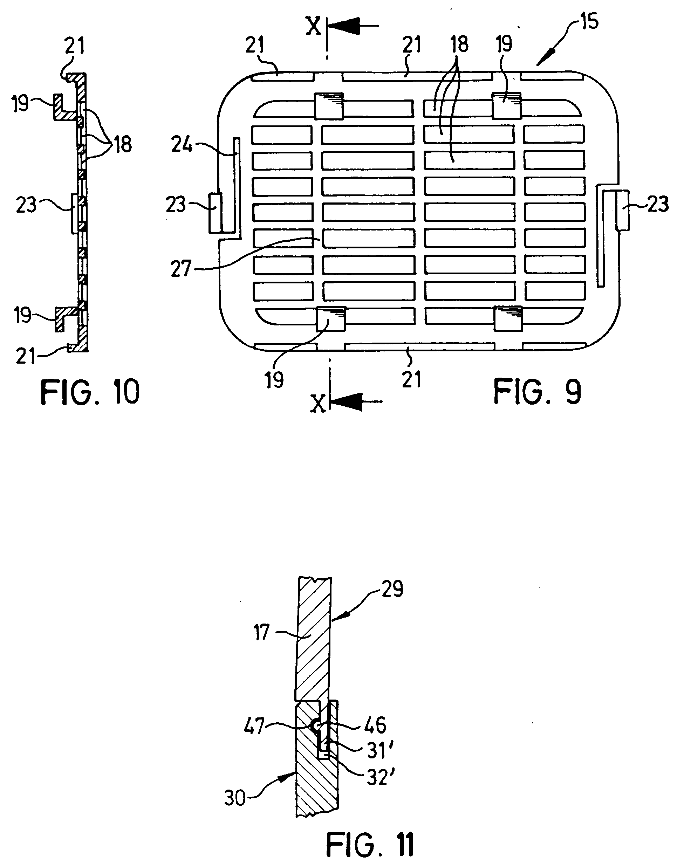

Eine alternative Ausgestaltung zu den Rastvorsprüngen 33 und Rastvertiefungen 48 der Fig. 4 ist in Fig. 11 dargestellt. Hierbei sind an vorspringenden Teilen 31' der oberen Schale 29 kugelkappenförmige Knöpfe 46 vorgesehen, die in entsprechend geformte Mulden 47 an der unteren Schale 30 eingreifen. Die kugelkappenförmige Gestaltung ermöglicht bei entsprechendem seitlichen Spiel des vorspringenden Teiles 31' in der Vertiefung 32' bei Aufbringen entsprechender verikaler Kraft ein Abziehen der oberen Schale 29 nach oben.

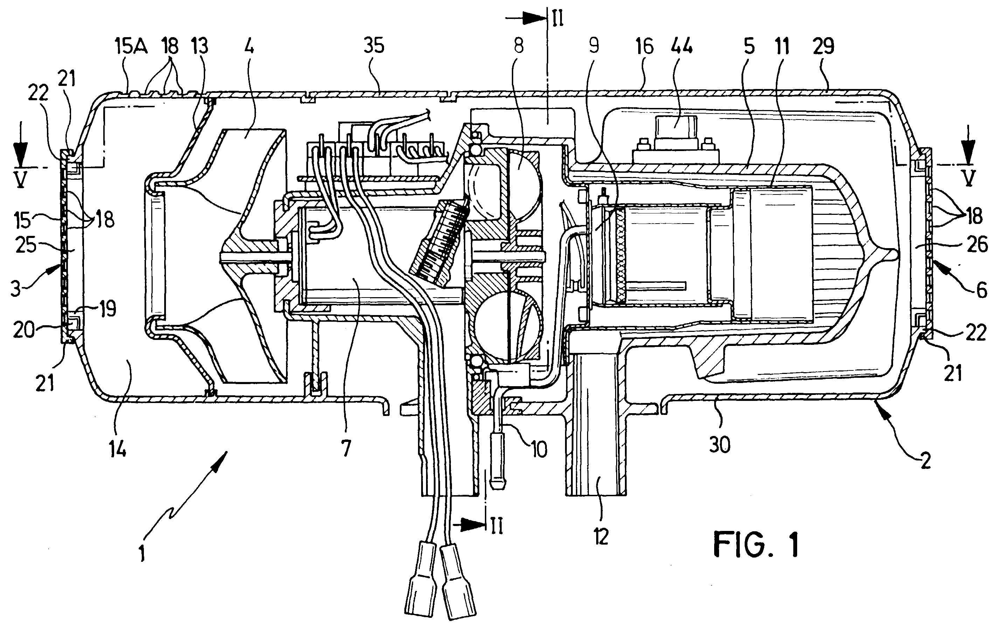

Zusätzlich oder alternativ zu den vorstehend beschriebenen Verrastungen über die Seitenwände der oberen Schale 29 und der unteren Schale 30 ist auch eine Verrastung der beiden Schalen 30 über separate Teile möglich. Hierzu können sowohl das Einströmgitter 15 an der Stirnseite 3 des Gehäuses 2 als auch das Ausströmgitter 34 an der gegenüberliegenden Stirnseite 6 des Gehäuses 2 verwendet werden. Ferner kann als separates Rastelement auch - wie weiter unten beschrieben - ein Deckel 35 (Fig. 6) verwendet werden. In den Fign. 9 und 10 ist ein Einströmgitter 15 im Detail dargestellt. Das Ausströmgitter 34 ist baugleich zum Einströmgitter 15 gestaltet. Im montierten Zustand sind Einströmgitter 15 und Ausströmgitter 34 in den Fign. 1 und 5 dargestellt. Das Einströmgitter 15 weist mehrere parallele, horizontal verlaufende Schlitze 18 für den Durchtritt der Heizluft auf. Zur Versteifung sind die zwischen den Schlitzen liegenden Wandteile über Stege 27, die in Abständen die Schlitze 18 durchbrechen, miteinander verbunden. Auf einer Seite des Einströmgitters 15 sind an der Ober- und Unterkante Vorsprünge 21 angeordnet, die - wie in Fig. 1 zu sehen - vorspringende Ränder 22 an den Stirnseiten 3 bzw. 6 des Gehäuses 2 von außen umgreifen. Auf derselben Seite des Einströmgitters 15 sind weiter innen liegend L-förmige Rasthaken 19 vorgesehen, die bei der Montage gehäusefeste Rastnasen 20 (Fig. 1, 5 und 6) hintergreifen. Zu beiden Seiten weist das Einströmgitter 15 Federzungen 23 auf, die zweckmäßigerweise, wie dargestellt, direkt aus dem Material des Einströmgitters durch L-förmige Einschlitzungen 24 hergestellt sind. Die Federzungen 23 legen sich bei der Montage am Gehäuse 2, wie in Fig. 5 zu sehen, seitlich an die vorspringenden Ränder 22 an. Die Montage des Einströmgitters 15 erfolgt so, daß dieses mit seinen Rasthaken 19 so vor der Stirnseite 3 des Gehäuses 2 positioniert wird, daß die Rasthaken 19 unmittelbar rechts oder links neben den Rastnasen 20 zu liegen kommen und die Vorsprünge 21 die Ränder 22 oben und unten übergreifen. Durch leichtes seitliches Verschieben des Einströmgitters 15 werden die Rasthaken 19 hinter den Rastnasen 20 zum Eingriff gebracht, wobei sich gleichzeitig die Federzungen 23 außen an die vorspringenden Ränder 22 anlegen. Dadurch, daß die Vorsprünge 21 oben und unten gegen die Ränder 22 des Gehäuses 2 drücken, wird die obere Schale 29 mit der unteren Schale 30 in vertikaler Richtung verklammert.

Wie in Fig. 6 zu sehen, ist an der oberen Schale 29 ein Deckel 35 vorgesehen, der eine darunter liegende Öffnung 36 (Fig. 3) abdeckt. Unterhalb dieser Öffnung 36 liegt eine Platine 43 eines integrierten Steuergeräts für das Luftheizgerät 1. Die Sicherung für den Überhitzungsschutz 44, eine CO₂-Einstellschraube 45 sowie nicht näher bezeichnete weitere, für die Einstellung und Diagnose vorgesehene Bauteile sind somit nach Abnehmen des Deckels 35 für die entsprechenden Arbeiten frei zugänglich (Fig. 5). Die Öffnung 36 erstreckt sich über die gesamte Oberseite 16 der oberen Schale 29 und reicht bis etwa in die Mitte der Seitenwände 17 derselben hinein. An die Öffnung 36 nach unten anschließend sind in beiden Seitenwänden 17 der oberen Schale 29 halbkreisförmige Ausnehmungen 37 vorgesehen. Die Seitenwände 17 weisen ferner eine horizontal oberhalb der Trennfuge 28 verlaufende Rastrille 42 auf, die nach innen vorspringt und zur Aufnahme von Rastvorsprüngen am Deckel 35 dienen. Diese Rastvorsprünge sind nicht dargestellt, entsprechen in ihrer Art jedoch in etwa den Rastvorsprüngen 33 in Fig. 4. Der Deckel 35 weist in einem seiner Seitenteile 41 einen nach unten geöffneten Schlitz auf, der nach oben von einer halbkreisförmigen Ausnehmung 38 begrenzt wird. Die Ausnehmung 37 an der oberen Schale 29 und die Ausnehmung 38 am Deckel 35 sind dabei so angeordnet, daß sie bei montiertem Deckel 35 insgesamt einen kreisförmigen Durchbruch 39 zur Aufnahme einer Kabeldurchführung bilden. Dadurch, daß auf beiden Seiten der oberen Schale 29 Ausnehmungen 37 vorgesehen sind, kann je nach Einbaufall des Luftheizgerätes 1 die Kabeldurchführung auf der einen oder der anderen Seite des Gehäuses 2 angeordnet werden. Als Kabeldurchführung wird eine Tülle 40 verwendet, die im Detail in den Fign. 7 und 8 dargestellt ist. Die Tülle 40 wird mit ihrer Nut 49 auf eine der Ausnehmungen 37 aufgesteckt. Nach Montage des Deckel 35 liegt dessen Ausnehmung 38 an der oberen Nut 50 der Tülle 40 an. Durch die kegelförmige Gestaltung des Durchbruchs der Tülle wird erreicht, daß das Kabel leicht hindurchgefädelt werden kann und dennoch dicht an deren Innenwänden anliegt, sodaß keine Heizluft in diesem Bereich austreten kann.

In einer in Fig. 6 strichpunktierten Variante ist das Seitenteil 41A des Deckels 35 verlängert und seitlich bis in den Bereich der Seitenwand der unteren Schale hineingeführt. Die Seitenwand der unteren Schale 30 weist eine Rastrille 42' auf, in die sich nicht dargestellte, an der Innenseite des Seitenteils 41A angeordnete Rastvorsprünge einlegen und somit zusätzlich die obere Schale 29 und die untere Schale 30 in vertikaler Richtung verklammern.

Das erfindungsgemäße Luftheizgerät ist somit ohne jede Schraube aus zwei Gehäuseteilen zusammengesetzt und auch die Ein- und Ausströmgitter sowie ein Deckelteil und die von diesem teilweise gebildete Kabeldurchführung werden ohne Fremdwerkzeuge nur durch federnde Rastverbindungen am Gehäuse befestigt. Wie dargestellt, dienen sie vorteilhaft gleichzeitig zur vertikalen Verklammerung der beiden Gehäusehälften. Ein derartiges Luftheizgerät ist einfach und kostengünstig herstellbar und montierbar. Ebenso ist eine Ersteinstellung durch die Einbauwerkstatt, die Wartung und der Austausch von Verschleißteilen wesentlich einfacher als bei bekannten Luftheizgeräten.

### Bezugszeichenliste

- 1: Luftheizgerät
- 2: Gehäuse
- 3: Stirnseite (Lufteintritt)
- 4: Heizluftgebläse
- 5: Wärmetauscher
- 6: Stirnseite (Luftaustritt)
- 7: Elektromotor
- 8: Brennluftgebläse
- 9: Brenner
- 10: Brennstoffleitung
- 11: Brennkammer
- 12: Abgasstutzen
- 13: Blende
- 14: Lufteintrittskammer
- 15,15A: Einströmgitter
- 16: Oberseite (von 29)
- 17: Seitenwand (von 29)
- 18: Schlitze
- 19: Rasthaken
- 20: Rastnasen
- 21: Vorsprünge
- 22: Ränder
- 23: Federzungen
- 24: Einschlitzung
- 25: Lufteintrittsöffnung
- 26: Luftaustrittsöffnung
- 27: Stege
- 28: Trennfuge
- 29: obere Schale (von 2)
- 30: untere Schale (von 2)
- 31: vorspringende Teile
- 32: Vertiefungen
- 33: Rastvorsprünge
- 34: Auströmgitter
- 35: Deckel
- 36: Öffnung
- 37: Ausnehmungen (an 36)
- 38: Ausnehmung (an 35)
- 39: Durchbruch
- 40: Tülle
- 41,41A: Seitenteil (von 35)
- 42: Rastrille
- 43: Platine
- 44: Überhitzungsschutz
- 45: CO₂-Einstellschraube
- 46: Knopf
- 47: Mulde
- 48: Rastvertiefungen
- 49: Nut
- 50: Nut

## Patentansprüche

1. Luftheizgerät (1) mit einem in einem Gehäuse (2) angeordneten Brenner (9) zur Erzeugung heißer Brenngase, die in einem Wärmetauscher (5) Wärmeenergie an längs der Innenwand des Gehäuses (2) von einer Lufteintrittsöffnung (25) zu einer Luftaustrittsöffnung (26) geförderte Heizluft abgeben, wobei das Gehäuse (2) in Längsrichtung durch wenigstens eine horizontal verlaufende Trennfuge (28) in eine obere Schale (29) und eine untere Schale (30) unterteilt ist, **dadurch gekennzeichnet,** daß eine der Schalen (29) im Bereich der Trennfuge (28) in vertikaler Richtung vorspringende Teile (31) aufweist, die in entsprechend geformte Vertiefungen (32) an der anderen Schale (30) eingreifen und daß ferner in horizontaler Richtung quer zur Trennfuge (28) federnd bewegbare, beide Schalen (29, 30) in vertikaler Richtung verklammernde Rastelemente (33; 48; 46, 47; 15, 34; 35) vorgesehen sind.

2. Luftheizgerät (1) nach Anspruch 1, **dadurch gekennzeichnet,** daß die Rastelemente von mit den Schalen (29, 30) verbundenen Teilen (33) gebildet werden.

3. Luftheizgerät (1) nach Anspruch 1 oder 2, **dadurch gekennzeichnet,** daß die Rastelemente von an einer Schale (29) vorgesehenen Rastvorsprüngen (33, 46) und an der anderen Schale (30) angeordneten Rastvertiefungen (47, 48) gebildet werden.

4. Luftheizgerät (1) nach Anspruch 3, **dadurch gekennzeichnet,** daß die Rastvorsprünge als kugelkappenförmige Knöpfe (46) und die Rastvertiefungen als komplementär dazu geformte Mulden (47) ausgebildet sind.

5. Luftheizgerät (1) nach einem der vorherghenden Ansprüche, **dadurch gekennzeichnet,** daß zumindestens ein Teil der Rastelemente von separaten, beide Schalen (29, 30) verklammernden Teilen (15, 34, 35) gebildet wird.

6. Luftheizgerät (1) nach Anspruch 5, **dadurch gekennzeichnet**, daß als verklammerndes Teil ein Lufteintritts- (15) und/oder Luftaustrittsgitter (34) dient, das stirnseitig an den Schalen (29, 30) vorgesehene Vorsprünge umgreift.

7. Luftheizgerät (1), nach einem der vorhergehenden Ansprüche, mit einem eine Öffnung (36) an einer der Schalen (29) abdeckenden Deckel (35), **dadurch gekennzeichnet**, daß der Deckel (35) die Oberseite (16) der Schale (29) übergreift und daß die betreffende Schale (29) und/oder der Deckel (35) im Bereich der Seitenwände (17 bzw. 41) federnd bewegbare Rastelemente aufweisen.

8. Luftheizgerät (1) nach Anspruch 7, **dadurch gekennzeichnet**, daß der Deckel (35) eine Schale (29) vollkommen umgreift und seine Rastelemente mit denen der anderen Schale (30) zur vertikalen Verklammerung beider Schalen (29, 30) in Eingriff stehen.

9. Luftheizgerät (1) nach Anspruch 7 oder 8, **dadurch gekennzeichnet**, daß an einer der vom Deckel (35) umgriffenen Schalen (29) angrenzend an die Öffnung (36) eine halbkreisförmige Ausnehmung (37) vorgesehen ist, die mit einer einen entgegengesetzt geöffneten Halbkreis bildenden Ausnehmung (38) am Deckel (35) einen insgesamt kreisförmigen Durchbruch (39) für eine Kabeldurchführung (40) bildet.

10. Luftheizgerät (1) nach Anspruch 9, **dadurch gekennzeichnet**, daß zu beiden Seiten der Öffnung (36) höhengleich in jeder der Seitenwände (17) der Schale (29) eine halbkreisförmige Ausnehmung (37) vorgesehen ist und daß der Deckel (35) wahlweise so auf die Öffnung (36) aufsetzbar ist, daß seine Ausnehmung (38) mit einer der Ausnehmungen (37) an der Schale (29) einen Durchbruch (39) bildet.

11. Luftheizgerät (1) nach einem der Ansprüche 7 bis 10, **dadurch gekennzeichnet**, daß unterhalb des Deckels (35) durch die Öffnung (36) zugänglich Elemente (45) zur Einstellung, Überwachung, Diagnose und/oder Wartung des Heizgeräts angeordnet sind.

## Claims

1. An air heater (1) with, disposed in a housing (2), a burner (9) for generating hot combustion gases which, in a heat exchanger (5), delivers heat energy to heating air which is delivered along the inside wall of the housing (2) from an air inlet port (25) to an air outlet port (26), whereby, in the longitudinal direction, the housing (2) is subdivided by at least one horizontally extending joint (28) into an upper shell (29) and a lower shell (30), characterised in that one of the shells (29) has, projecting in a vertical direction in the region of the joint (28), parts (31) which engage correspondingly shaped depressions (32) on the other shell (30) and in that furthermore in a horizontal direction there are catch elements (33; 48; 46, 47; 15, 34; 35) adapted for movement resiliently in a horizontal direction crosswise to the joint (28) and which clamp both shells (29, 30) in a vertical direction.

2. An air heater (1) according to Claim 1, characterised in that the catch elements are formed by parts (33) connected to the shells (29, 30).

3. An air heater (1) according to Claim 1 or 2, characterised in that the catch elements are formed by catch projections (33, 46) provided on a shell (29) and catch depressions (47, 48) disposed on the other shell (30).

4. An air heater (1) according to Claim 3, characterised in that the catch projections are constructed as calotte-cap shaped studs (46) while the catch depressions are constructed as matchingly shaped depressions (47).

5. An air heater (1) according to one of the preceding Claims, characterised in that at least a part of the catch elements are formed by separate parts (15, 34, 35) which clamp together the two shells (29, 30).

6. An air heater (1) according to Claim 5, characterised in that, as a clamping part, an air inlet (15) and/or air outlet grid (34) is used which, at the ends, engages around projections (22) provided on the shells (29, 30).

7. An air heater (1) according to one of the preceding Claims, with a cover (35) covering an aperture (36) on one of the shells (29), characterised in that the cover (35) engages over the top (16) of the shell (29) and in that the respective shell (29) and/or the cover (35) have resiliently movable catch elements in the region of the side walls (17, 41 respectively).

8. An air heater (1) according to Claim 7, characterised in that the cover (35) engages fully around a shell (29), its catch elements engaging those of the other shell (30) so that both shells (29, 30) are clamped together.

9. An air heater (1) according to Claim 7 or 8, characterised in that adjacent one of the shells (29) around which the cover (35) engages there is adjacent the aperture (36) a semi-circular recess (37) which together with an oppositely open semi-circular recess (38) in the cover (35) forms a circular aperture (39) for the passage of a cable (40).

10. An air heater (1) according to Claim 9, characterised in that on both sides of the aperture (36) and at the same height there is a semi-circular recess (37) in each of the side walls (17) of the shell (29) and in that the cover (35) can optionally be so fitted onto the aperture (36) that its recess (38), together with one of the recesses (37) on the shell (29), forms an aperture (39).

11. An air heater (1) according to one of Claims 7 to 10, characterised in that elements (45) which are under the cover (35) and which are accessible through the aperture (36) are disposed for adjustment, monitoring, diagnosis and/or maintenance of the heater.

## Revendications

1. Réchauffeur d'air (1) comportant un brûleur (9) logé dans un boîtier (2) pour générer des gaz de combustion chauds fournissant leur énergie thermique dans un échangeur de chaleur (5), de l'air à chauffer circulant le long de la paroi intérieure du boîtier (2) entre un orifice d'entrée d'air (25) et un orifice de sortie d'air (26), le boîtier (2) étant subdivisé en une coquille supérieure (29) et une coquille inférieure (30) se rejoignant dans la direction longitudinale suivant au moins un joint horizontal (28), caractérisé en ce que l'une des coquilles (29) présente, au niveau du joint (28), des pièces en saillie (31) dans la direction verticale, pour venir prendre dans des cavités de forme correspondante (32) de l'autre coquille (30) et en ce qu'en outre, dans la direction horizontale, transversalement au joint (28), les deux coquilles (29, 30) comportent des éléments d'encliquetage (33 ; 48 ; 46, 47 ; 15, 34 ; 35) qui s'accrochent dans la direction verticale, et qui sont élastiques horizontalement, transversalement au joint (28).

2. Réchauffeur d'air (1) selon la revendication 1, caractérisé en ce que les éléments d'encliquetage sont formés par des pièces (33) reliées aux coquilles (29, 30).

3. Réchauffeur d'air (1) selon la revendication 1 ou 2, caractérisé en ce que les éléments d'encliquetage sont formés par des pièces en saillie (33, 16), prévues sur une coquille (29) et par des cavités d'encliquetage (47, 48) prévues sur l'autre coquille (30).

4. Réchauffeur d'air (1) selon la revendication 3, caractérisé en ce que les pièces en saillie d'encliquetage sont des boutons (46) en forme de têtes sphériques et les cavités d'encliquetage sont des gorges (47) de forme complémentaire.

5. Réchauffeur d'air (1) selon l'une des revendications précédentes, caractérisé en ce qu'au moins une partie des éléments d'encliquetage est constituée par des pièces (15, 34, 35) pinçant les deux coquilles (29, 30).

6. Réchauffeur d'air (1) selon la revendication 5, caractérisé en ce que la pièce à pincer est une grille d'entrée d'air (15) et/ou de sortie d'air (34) qui entoure frontalement des saillies (22) prévues sur les coquilles (29, 30).

7. Réchauffeur d'air (1) selon l'une des revendications précédentes, comportant un couvercle (35) recouvrant une ouverture (36) sur l'une des coquilles (29), caractérisé en ce que le couvercle (35) passe par-dessus la face supérieure (16) de la coquille (29) et en ce que la coquille (29) correspondante et/ou le couvercle (35) comportent des éléments d'accrochage mobiles élastiquement au niveau des parois latérales (17, 41).

8. Réchauffeur d'air (1) selon la revendication 7, caractérisé en ce que le couvercle (35) entoure complètement une coquille (29) et ses éléments d'encliquetage sont en prise avec ceux de l'autre coquille (30) pour le serrage vertical des doux coquilles (29, 30).

9. Réchauffeur d'air (1) selon la revendication 7 ou 8, caractérisé en ce qu'à une des coquilles (29) entourée du couvercle (35), adjacente à l'ouverture (36), est prévue une découpe (37) en demi-cercle qui forme avec une découpe (35) en demi-cercle opposée sur le couvercle (35), un passage (39) globalement en forme de demi-cercle pour le passage d'un câble (40).

10. Réchauffeur d'air (1) selon la revendication 9, caractérisé en ce que des deux côtés de l'ouverture (36), à la même hauteur, dans chacune des parois latérales (17) de la coquille (29) il y a une découpe (37) en forme de demi-cercle et en ce que le couvercle (35) peut se monter au choix sur l'ouverture (36) pour que sa découpe (38) forme avec la découpe (37) de la coquille (29) un passage(39).

11. Réchauffeur d'air (1) selon l'une des revendications 7 à 10, caractérisé en ce qu'en dessous du couvercle (35) il y a des éléments (45) accessibles à travers l'ouverture (36) pour régler, surveiller, diagnostiquer et/ou entretenir le réchauffeur.
